# EUROPEAN PATENT SPECIFICATION

(11) **EP 1 582 960 B1**
(45) Date of publication and mention of the grant of the patent: **18.07.2007**
(21) Application number: 05011574.0
(22) Date of filing: 15.02.2002
(51) Int. Cl.: G06F 1/00

(54) **Systems for selectively enabling and disabling access to software applications over a network and method for using same**
System und Verfahren zur selektiven Aktivierung und Deaktivierung des Zugangs zu Software-Anwendungen über ein Netzwerk
Systèmes permettant d'activer et de désactiver sélectivement l'accès à des applications logicielles via un réseau et procédés d'utilisation dudit système

(30) Priority: 16.02.2001 US 269613
(43) Date of publication of application: 05.10.2005
(62) Divisional of application: 02713623.3
(73) Proprietor: UNITED PARCEL SERVICE OF AMERICA, INC., Atlanta, GA 30328 (US)
(72) Inventor: Davis, Eric, Randallstown Maryland 21133 (US); Yeung, Steve, Timonium Maryland 21093 (US); Appelbaum, James, Baltimore Maryland 21228 (US); Summey, Gerry, Roswell Georgia 30075 (US); Turbeville, Dan, Snellville Georgia 30078 (US); Gittings, Dave, Roswell Georgia 30075 (US); Young, Dave, Emporia Kansas 66801 (US)
(74) Representative: Chettle, Adrian John

(56) References cited:
- EP-A- 0 895 148
- EP-A- 0 947 925
- WO-A-00/08909
- WO-A-00/72185

## Description

### FIELD OF THE INVENTION

Systems, methods, processes and computer program products to selectively provide access to network applications using a licensing process that offers improved control and tracking capabilities.

### BACKGROUND OF THE INVENTION

The rise of the Internet has resulted in an unprecedented increase in online commerce. In today's world, businesses often need to have an online presence to remain competitive. Part of that online presence is the ability to offer online services to customers. Banks, for example, now offer a variety of services over the Internet to allow customers to access and manage their bank accounts from home.

Online applications have become an important tool in the package transportation industry. Package carriers such as the United Parcel Services of America, Inc. (UPS) now have Internet web sites that offer online services such as package tracking, signature tracking, rate and time in transit calculations, address validation and shipping.

To provide services online, a business often needs to give its customers access to one or more applications. At the same time, a business may need to control access to its applications and insure that the users of the application agree to certain terms and conditions of use. For example, a business may offer several applications and may need to restrict some of the applications to a certain class of user. Or a business may offer a basic application to everyone and otter an upgrade or additional functionality on a premium or pay-for-use basis. A need therefore exists for an improved system to provide access to online applications and to control the terms and condition of their use.

The ability to control and track the use of an online application is further complicated by the prevalence of third-party software, which access online services and applications on behalf of a user. In the package transportation industry, for example, many customers use third-party shipping systems to manage package shipments. Many such shipping systems include an online component that automatically connects to carrier online applications and provides users the benefits of the carrier online services or applications. Carriers and other businesses benefit from these third-party applications because more people use their services. But the additional layer between the business and the user of the online applications can make it difficult for a business to determine which users are actually using their online offerings. A need therefore exists in the industry for an improved system to track and control the use of online services and applications by users of third-party applications.

Thus, an unsatisfied need exists for improved online application licensing and access methods and systems that overcomes deficiencies in the prior art, some of which are discussed above.

WO 00/08909 discloses an access system having the features of the pre-characterizing portion of claim 1 appended hereto.

According to the invention there is provided a system for selectively providing a user with access to an online tool over a network, the system comprising:
a customer computer;
an access control application in electronic communication with said customer computer via said network, said access control application configured to authorize said user to access said online tool, and said access control application further configured to issue a developer key and an access key to said authorized user, and
an access tracking application in electronic communication with said access control application, said access tracking application configured to track said authorized user access to said online tool,
characterized in that said access control application is further configured to allow access to said online tool upon receipt from said user of said developer and said access keys.

The invention also provides a method to allow an application provider to track access to network applications by users of third-party software, said method comprising the steps of:
issuing a first key to a developer of said third-party software, wherein said first key is common to a plurality of users of said third-party software;
issuing a second key to a user, wherein said user is one of said plurality of users of said third-party software;
requiring that said first and second keys be provided to access said network application; and
tracking said access to said network application by said first and second keys.

### BRIEF DESCRIPTION OF THE DRAWINGS

Having thus described the invention in general terms, reference will now be made to the accompanying drawings, which are not necessarily drawn to scale, and wherein:
Fig. 1 is a high-level diagram of the architecture of a network application licensing and access system in accordance with an embodiment of the present invention.
Fig. 2 is a high-level flowchart in accordance with an embodiment or the present invention that describes a process wherein an end-user accepts the terms of a license agreement and obtains a developer key.
Fig. 3 is an example welcome web page that introduces a user to a web site operated by a network application provider.
Fig. 4 is an example of a web page in accordance with the present invention where a user is prompted to indicate whether the user is an end-user or a third-party developer.
Fig. 5 is an example of a web page in accordance with the present invention that prompts a user to register by providing registration information.
Fig. 6 is an example of a web page in accordance with the present invention that prompts a user to select a user identifier and password.
Fig. 7 is an example of a web page in accordance with the present invention that prompts a user to login to the web site.
Figs. 8A and 8B are an example of a web page in accordance with the present invention that displays a list of online tools available to a user.
Fig. 9 is an example of a web page in accordance with the present invention that prompts a user to provide additional information before receiving a license.
Fig. 10 is an example of a web page in accordance with the present invention that notifies a user that a developer key has been issued and allows a user to retrieve documentation about an online tool.
Fig. 11 is a high-level flowchart in accordance with an embodiment of the present invention that describes a process wherein a third-party developer may request a developer key and accept the terms of a license agreement.
Fig. 12 is a high-level flowchart in accordance with an embodiment of the present invention that describes a process wherein an user obtains an access key and accepts the terms of a license agreement.
Fig. 13 is an example of a web page that prompts a user to specity the type of access key requested.
Figs. 14A and 14B are examples of web pages that prompt a user to enter a valid developer key in order to obtain an access key.
Fig. 15 is an example of a web page in accordance with the present invention that prompts a user to provide additional information before receiving an access key.
Fig. 16 is an example of a web page that displays an access key.

### SUMMARY OF THE INVENTION

The present invention provides systems and methods for controlling access to networked applications. An embodiment of the invention discloses using developer and access keys to validate and control user access to one or more network applications. The network access and licensing system disclosed includes a customer computer, one or more network tools, and an access application configured to issue and license the use of developer and access keys.

In accordance with an embodiment of the invention a system for providing a user with access to an application via a network is disclosed which includes a customer computer, an access application in communication with the computer over a network, one or more network applications in communication with the access application and the customer computer, wherein the access application is configured to issue a developer key and access key to the customer computer and allow access to the one or more network applications upon receipt from the customer computer of input that the includes a valid developer and access key.

In accordance with another embodiment of the invention a system for providing a user with access to an application via a network is disclosed which includes a customer computer, an access application in communication with the computer over a network, one or more network applications in communication with the access application and the customer computer, wherein the access application is conngurea to issue a developer key and access key to the customer computer and allow access to the one or more network applications upon receipt from the customer computer of input that the includes a valid developer and access key, and wherein further the access application is additionally configured to secure a license agreement with the user sing the customer computer.

In accordance with another embodiment of the invention a system for providing a user with access to an application via a network is disclosed which includes a customer computer, an access application in communication with the computer over a network, one or more network applications in communication with the access application and the customer computer, wherein the access application is configured to issue a developer key and access key to the customer computer and allow access to the one or more network applications upon receipt from the customer computer of input that the includes a valid developer and access key, and wherein further the access application is further configured to track customer access to the network application.

In accordance with an embodiment of the invention a system for providing a user with access to an application via a network is disclosed which includes a customer computer, an access application in communication with the computer over a network, one or more network applications in communication with the access application and the customer computer, wherein the access application is configured to issue a developer key and access key to the customer computer and allow access to the one or more network applications upon receipt from the customer computer of input that the includes a valid developer and access key, and wherein further the access application is additionally configured to send a first license agreement to the customer computer prior to issuing the developer key and to send a second license agreement to the customer computer prior to issuing the access key.

In accordance with another embodiment or the present invention, a system for providing a user with access to an online tool over a network is disclosed that includes a customer computer, access control application in communication with the customer computer over the network, the access control application configured to authorize a user to access the online too and further configured to issue a develop key and access key to an authorized user, and an access tracking application configured to track the authorized user access to the online tool.

In accordance with an embodiment of the present invention, a method of limiting user access to a network application is described that includes the steps of issuing a first key to a user, wherein the first key gives the user access to an input record format associated with the network application, wherein further the input record includes a first key field and a second key field, issuing a second key to the user, receiving an input from the user, and allowing the network application to process the input if the first key field of the input contains the first key and the second key field of the input contains the second key.

In accordance with yet an embodiment of the present invention, a method of limiting user access to a network application is described that includes the steps of entering into a license agreement with the user, issuing a first key to a user, wherein the first key gives the user access to an input record format associated with the network application, wherein further the input record includes a first key field and a second key field, issuing a second key to the user, receiving an input from the user, and allowing the network application to process the input if the first key field of the input contains the first key and the second key field of the input contains the second key.

In accordance with yet an embodiment of the present invention, a method of limiting user access to a network application is described that includes the steps of entering into a first license agreement with the user, issuing a first key to a user, wherein the first key gives the user access to an input record format associated with the network application, wherein further the input record includes a first key field and a second key field, entering into a second license agreement with the user, issuing a second key to the user, receiving an input from the user, and allowing the network application to process the input if the first key field of the input contains the first key and the second key field of the input contains the second key.

In accordance with another embodiment of the present invention, a method is disclosed to allow an application provider to track access to network applications by users of third-party software, the method including the steps of issuing a first key to a develop of the third-party software, wherein the first key if common to a plurality of users of the third-party software, issuing a second key to a user, wherein the user is one of the plurality of users of the third-party software, requiring that the first and second keys be provided to access the network application, and tracking the access to the network application using the first and second keys.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope or the appended claims. Although specific terms are employed herein, they are used in a generic and descriptive sense only and not for purposes of limitation.

The following paragraphs describe systems and methods for controlling access to and presenting licenses for network applications. In a preferred embodiment, there are three stages to obtaining access to a network application. In the first stage, a developer registers with the network application provider **10,** accepts a license agreement and is issued a developer key, which, in a preferred embodiment, is a sixteen character alphanumeric identifier.

In a preferred embodiment, the developer is a type of user that has or is developing a client application to access network applications. When the developer receives a developer key, the developer is given access to documentation about the various network applications that are available. In addition, the developer key associates the developer to legal agreements to which the developer must agree before the application documentation may be accessed. In various embodiments described below, the developer may be a third-party software developer (one who builds software for sale) or an end-user developer (one who builds software for personal or company use).

In the second stage of the process, an access key is assigned **25.** In the case of a third-party developer, a unique access key **25** is assigned to a particular installation of the third-party developer software. In the case of an end-user developer, a unique access key is assigned to the end-user developer. In a preferred embodiment, an access key **25,** like the developer key, is a sixteen character alphanumeric identifier.

A user may interact with the client application or the client application may operate automatically without human intervention. For example, a developer might design a shipping system client application that accesses and uses various network applications operated by UPS. In this example, the client application might download the shipping information for a particular company or business and automatically contact the OPS tracking tools to track each package sent during a business day. In this way, a client application created by a developer access a network application without the need for user intervention. Alternatively a user may use a client application to access one or more network applications.

In a preferred embodiment, an access key **25** is assigned to a particular installation of a client application. In one embodiment, each client installation may be associated with one user or, alternatively, multiple users may share access to a single installation of the client application. The term end-user is used herein to describe the end-user developer and/or the user of an installation of a third-party developer application. But it should be recognized that an access key **25** assigned to an end-user developer may be shared by multiple users of a client application developed by the end-user developer. Similarly, an access key **25** assigned to an installation of a third-party developer application may be shared by multiple users of that installation.

An access key **25** can be obtained only if a developer key has been assigned. In a preferred embodiment, a single developer key is assigned to the client application and each installation of the client application receives a unique access key **25**. In general, the developer key identifies the client application used to access the networked applications and the access key identifies which user and/or which client installation is accessing the tools.

The third stage of the process is actual access and use of the network applications. In a preferred embodiment, a user may access one or more network applications once valid developer and access keys are assigned. A networked application, such as a package tracking tool, may require nothing more than a valid combination of the developer and/or access keys. Other applications, however, may require additional user-specific information. In one embodiment, for example, access to a network application may be predicated on a valid developer key identifying the client application, an access key **25** identifying an installation of the client application, and a user identifier and/or password identifying the specific user.

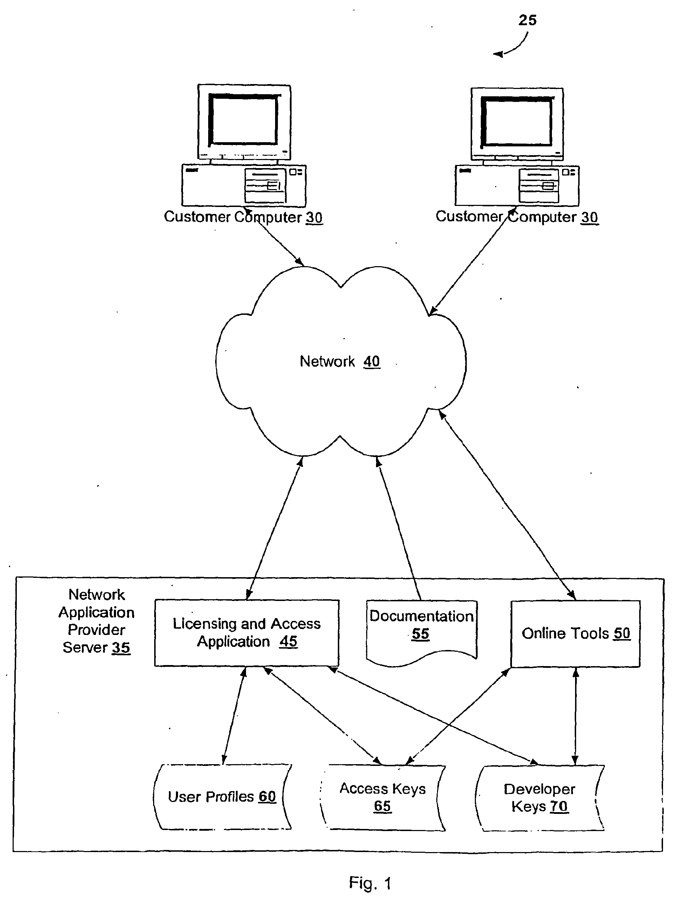

Each of the three stages is described in the following paragraphs and the referenced figures. Fig. 1 illustrates the architecture of a network application licensing and access system **25** in accordance with an embodiment of the present invention. In this embodiment, one or more customer computers **30** are in electronic communication with a network application provider server **35** via a network **40.** The network **40** described in this figure may be the Internet or any other network known in the art.

In this illustration, a licensing and access application **45** resides on the network application provider server **35,** but it will be readily apparent that the application can reside apart from the server as long as it is capable of communication with the one or more customer computers **30.** Also in this embodiment, one or more online tools **50** reside on the network application provider server **35.** In the embodiments described below, the term online tools **50** refers to software applications that perform services related to package tracking and delivery. But it will be readily apparent to one of ordinary skill in the art that the term online tools **50** should be defined to encompass any business application, including applications unrelated to the package transportation industry. Online tools **50** become available to the customer computer **30** once the user has obtained both the developer key and access key **20.**

An online tools documentation file **55** that includes information about the one or more online tools **50** is shown in Fig. 1. The documentation file 55 becomes available to the customer computer **30** once a developer key is assigned and, in one embodiment, provides the technical documentation necessary for the user to access and use the online tools **50.** In a preferred embodiment, a separate documentation file **55** is available for each online tool **50.** But it will be readily apparent to one of ordinary skill in the art that a single documentation file may apply to multiple tools or that multiple documentation files may be associated with a single online tool.

In addition, several files are illustrated in the system architecture of Fig. 1, including a user profile file **60,** a developer key file **65** and an access key file **70.** The user profile file **60** stores information associated with third-party developers and end-users and the developer and access key files stores the keys assigned to the various types of system users.

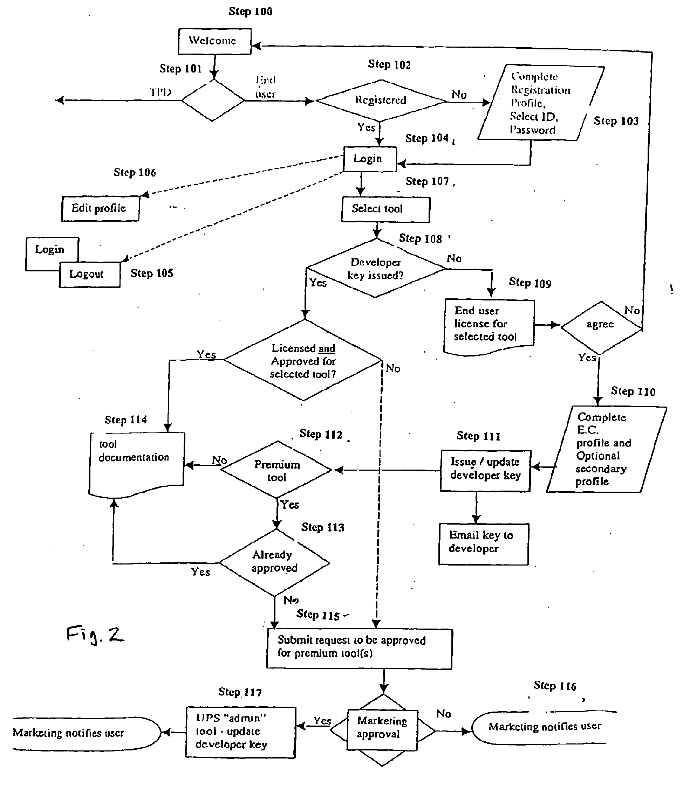

Fig. 2 is a high-level process flowchart in accordance with an embodiment of the present invention and illustrates a process wherein an end-user **30** obtains a developer key and accepts the terms of a license agreement via the Internet.

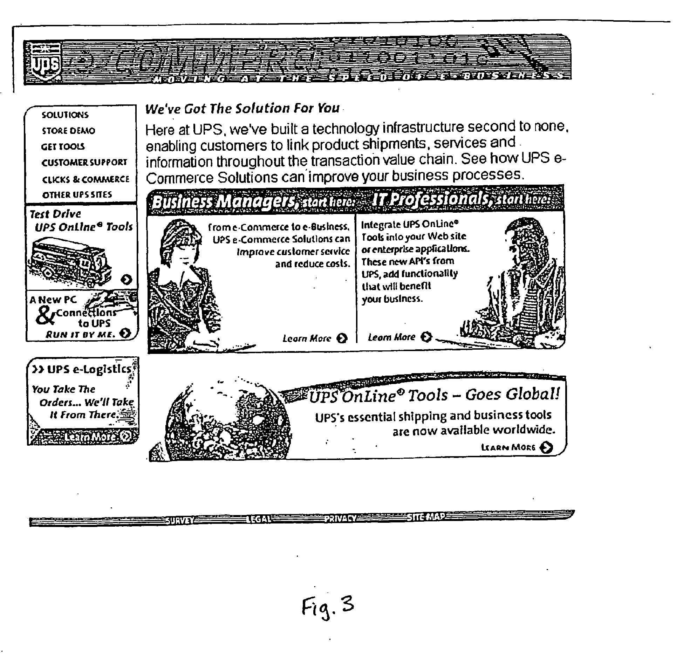

In Step **100** a user uses a web browser on a computer **30** to connect to the web site of a network application provider **10** and is presented with an introductory web page that identifies the site (Fig. 3). In a preferred embodiment, access to online tools is one of several options that may be available from the site and the process proceeds when the user activates a hyper-text link to the online tools **50** section of the web site.

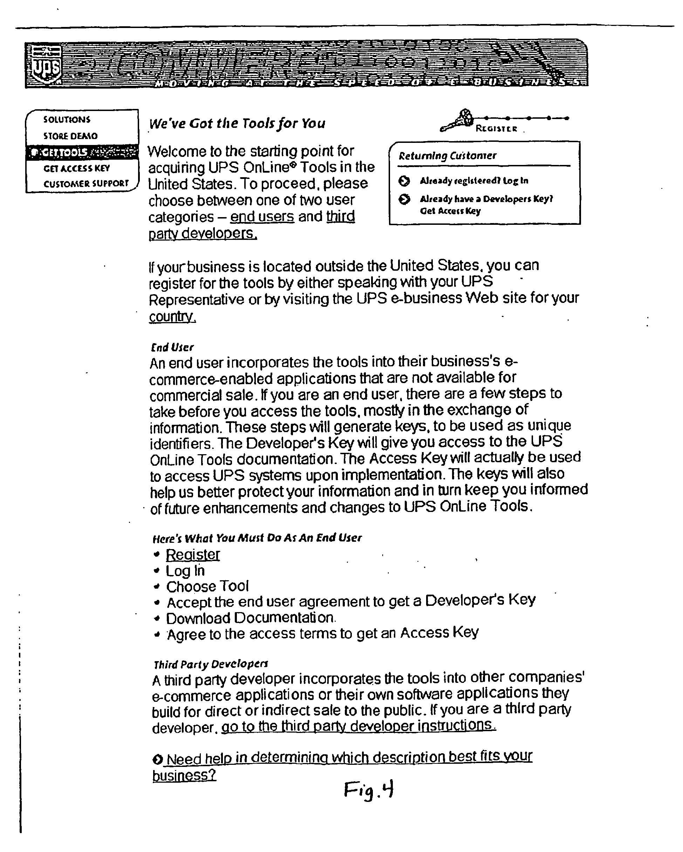

In Step **101,** the user is asked to identify whether he or she is an end-user or a third-party developer. Fig. 4 illustrates the type of web page that a user might see in Step **101.** In this embodiment, the web page describes an end-user as a user that intends to incorporate one or more of the online tools **50** into their own business e-commerce-enabled applications, and that the user's business applications are not otherwise available for commercial sale. In contrast, a third-party developer is identified as a user that intends to incorporate the online tools **50** into other companies' e-commerce applications or into a software application that the user intends to sell to others. Additional information relating to the terms end-user and third-party developer are available via a hyper-text link at the bottom of the page.

The following paragraphs describe the process flow for an end-user. The process flow for the third-party developer type of user is described later. When the user is identified as an end-user, the process proceeds to Step **102** where it is determined whether the user has previously registered with the network application provider **10**. If the user is already registered, the process proceeds to the login procedure of Step **104.** If the user has not previously registered, the process proceeds to Step **103** and the user is requested to complete a registration profile and asked to select a userid and password.

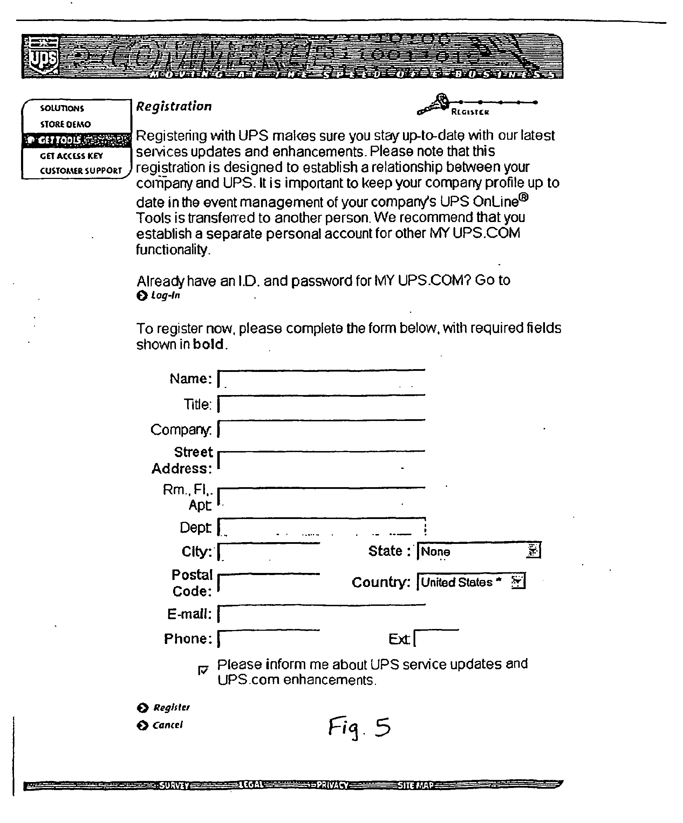

Fig. 5 is an example of a web page that a user might receive that prompts the user for information before allowing the user to logon to the system. In this example, name, residence, electronic mail and phone number are required. But it will be readily apparent that additional information may be required in alternative embodiments. A bank, for example, might require information about user checking and savings accounts to confirm that the user is affiliated with the bank before providing access to its applications.

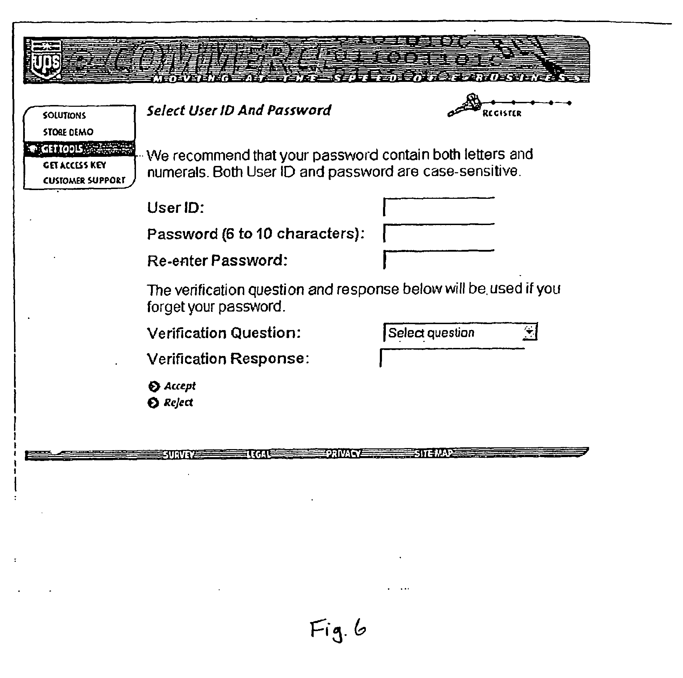

Fig. 6 illustrates a logon web page that allows a user to specify a user identifier and a password. In this embodiment, the user also has the option of specifying a verification question and response that will be used if the user should later forget his or her password. The use of such a verification response is well known in the art.

In a preferred embodiment, the registration profile information received from the user is captured by the licensing and access application **45** and stored in the user profile file **60.** When a user attempts to logon with a registration userid and password, the licensing and access program **45** validates the entered userid and password by comparing it against the registration profile information in the user profile file **60.**

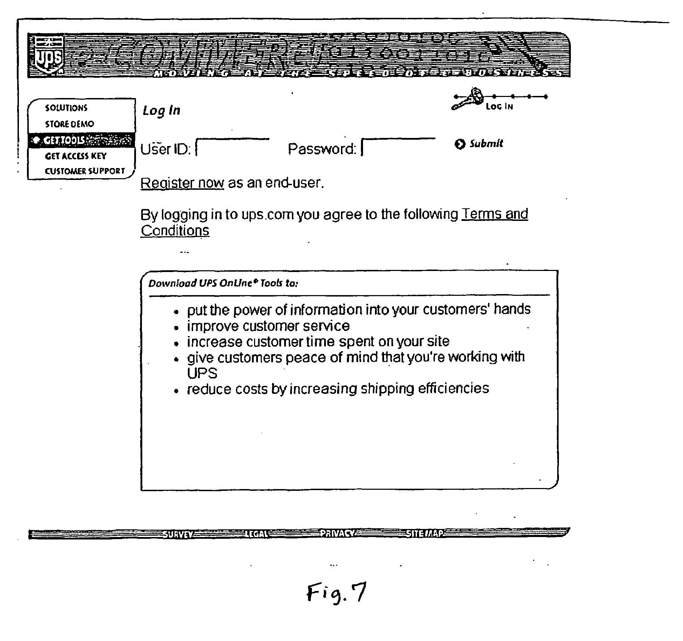

In Step **104,** the user is prompted to logon with a valid userid and password. Fig. 7 illustrates a web page that allows a user to enter his or her user identifier and password. In a preferred embodiment, the logon web page contains a link to a Terms and Conditions page. The Terms and Conditions page imposes certain limitations and legal obligations to which the user must agree to access the online tools **50.** In one embodiment, the licensing and access application **45** proceeds upon the receipt of a valid userid and password. In an alternative embodiment, the process does not proceed unless the user first activates the link to the Terms and Conditions web page. In still another embodiment, the logon page includes a box (not shown) that the user must check to affirmatively indicate that the user has read and agrees to the Terms and Conditions.

Next, in the process, the user has the option to logout (Step **105**) or to edit the registration profile information (Step **106**) previously provided.

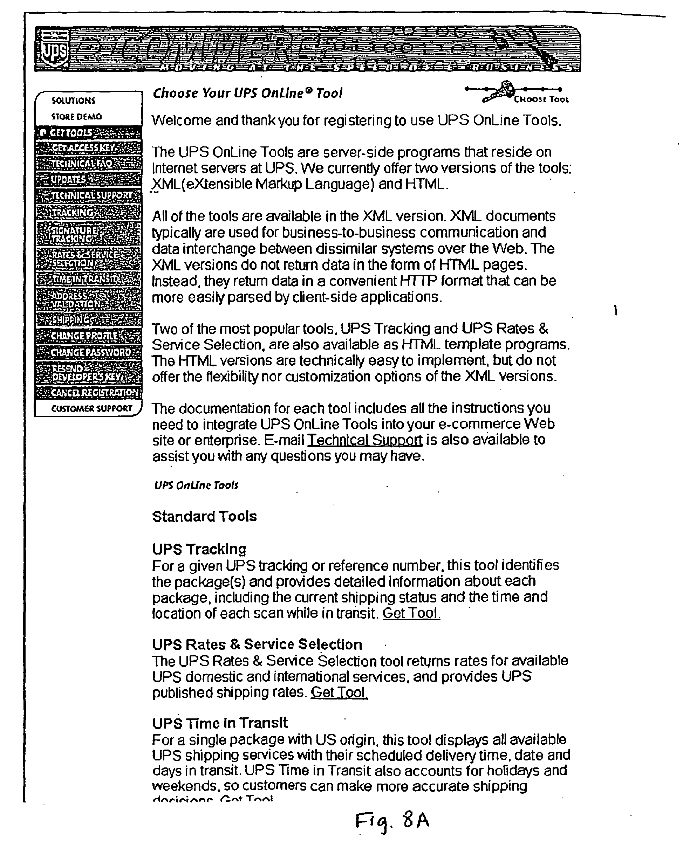

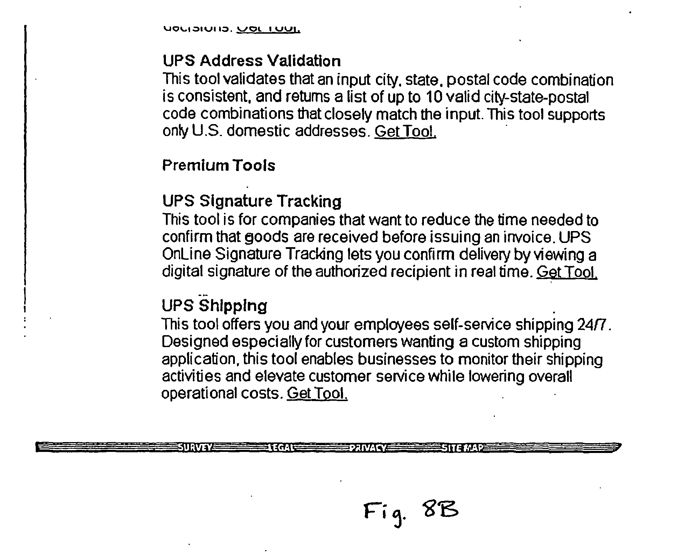

Upon confirmation of a valid userid and password, the process proceeds to Step **107** where the user is presented with a list of available online tools **50.** Figs. 8A and 8B show a web page that a user might see in Step **107** that display a list of available applications (referenced herein as online tools **50**) with an accompanying description of each. Each of the online tools **50** illustrated involve package tracking and delivery, but it will be readily apparent to one of ordinary skill in the art that the present invention is equally advantageous with any business that provides online applications to users over a network. In these figures a hypertext-link, labeled Get Tool, is associated with each online tool **50.**

In this example, the online tools **50** available to a user are separated into standard and premium tools. Standard tools are free to the user and include package tracking, rate and service selection, time in transit calculations and address validation. Premium tools that are available from this provider 10 include signature tracking and a shipping tool. As described in greater detail below, premium tools may not be available to all users or may be available for a fee.

The user selects a desired online tool **50** by clicking on the link associated with the application. When an online tool is thus activated, the process proceeds to Step **108** where it is determined whether the user has been assigned a developer key. If the user has not received a developer key, the process proceeds to Step **109** where the user receives an end-user license agreement **85.**

License agreements are well known in the art. In a preferred embodiment, a license agreement is formatted as a web page and presented to the user through his or her browser. It will be readily apparent, nowever, that a license agreement may be provided to a user via electronic mail or by other means that are known in the art. In a preferred embodiment, the license agreement web page has a section where the user is prompted to affirmatively click on one of two boxes to accept or reject the terms of the license agreement **85.** If the user refuses to agree to the terms of the license **85,** the user is returned to the introductory web page. If the user accepts the terms of the license **85,** the process proceeds to Step **110.**

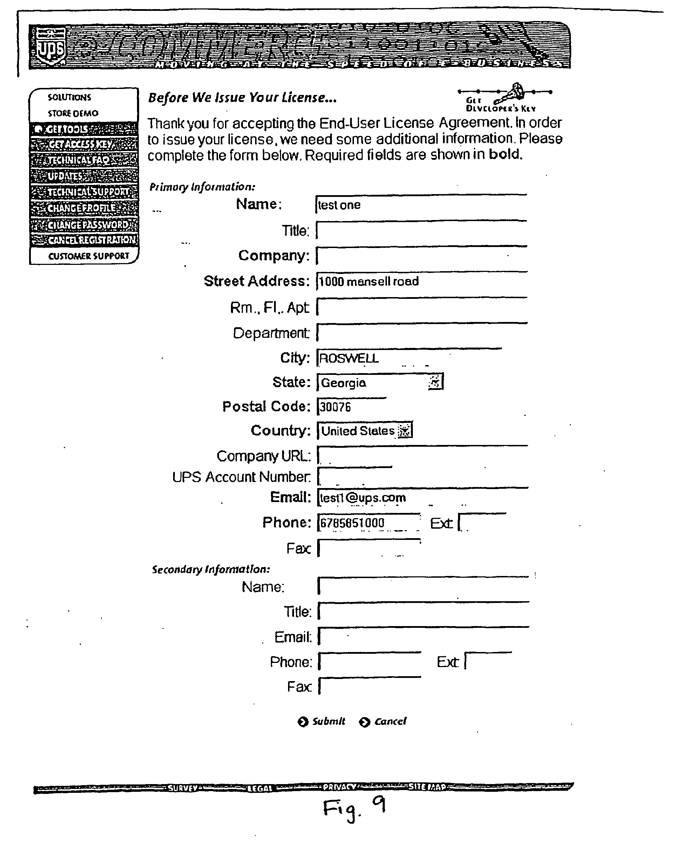

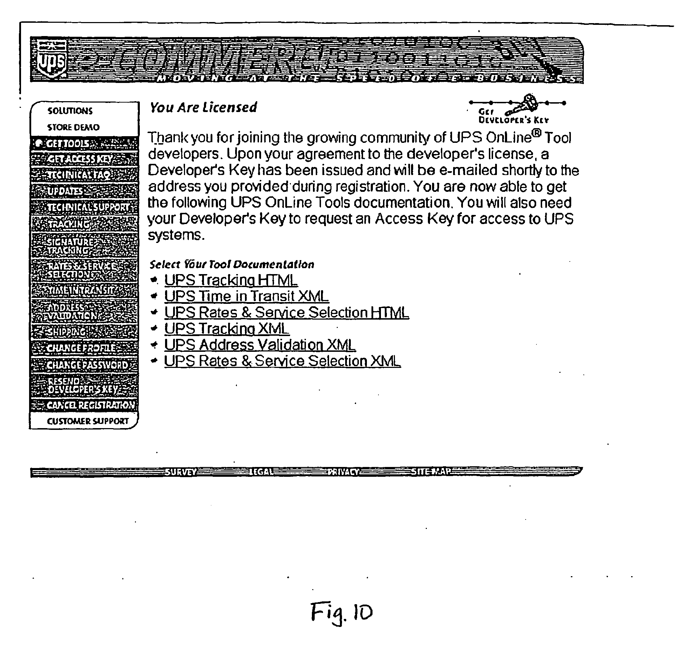

In Step **110,** the user is prompted to provide additional registration information. The web page screen shot of Fig. 9 illustrates the type of information that may be requested at this stage in the process. In a preferred embodiment, the additional registration information is captured by the licensing and access application **45** and stored in the user profile file **60.** In an alternative embodiment, the additional registration information is stored in a file separate from the user profile information. In addition, one of ordinary skill in the art will readily recognize that some or all of the functions attributed to the licensing and access application **45** may be performed by different applications that may or may not reside on the same network application provider server **35.**

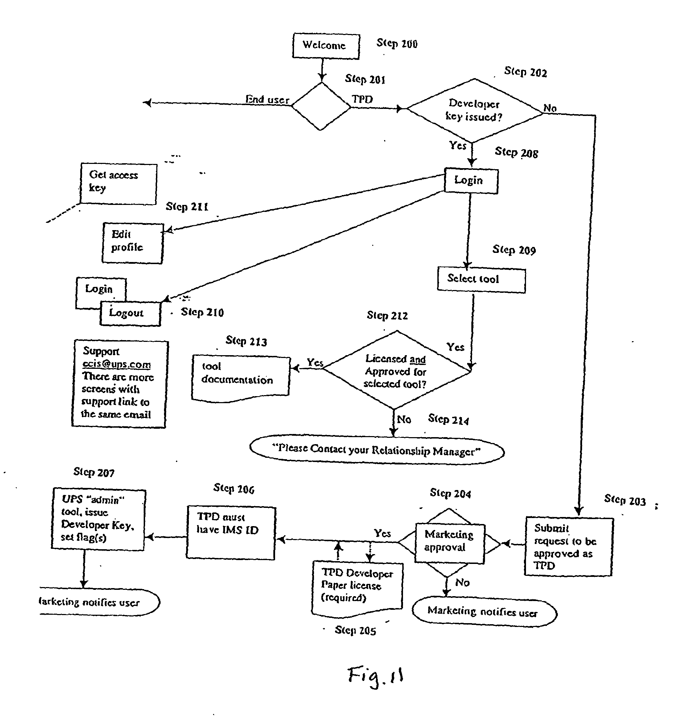

Upon completion of the required fields, a developer key is issued to the user (Step **111**). Fig. 10 illustrates the type of web page that an end-user might receive upon the issuance of a developer key. In this embodiment, the developer key is sent to the end-user via electronic mail, but it will be readily apparent that the developer key may be displayed on the web page or otherwise provided to the user by other means known in the art.

The web page shown in Fig. 10 also provides links to the online tools documentation **55** for each of the online tools **50.** In the disclosed embodiment, documentation **55** for each of the online tools **50** is made available to the end-user upon issuance of a developer key. But it will be readily apparent to one of ordinary skill in the art that the documentation **55** made available to the end-user may be limited on the registration information provided by the user. Alternatively, a network application provider **10** may list all of the available online tools documentation **55** but limit use of the online tools to certain types of users. In still another alternative embodiment, different developer keys may be issued for different categories of online tools **50.** For example, one developer key might be issued for online tools **50** that are free of charge, while another developer key might be used for premium online tools **50.**

Every user requires a developer key to access the online tools **50.** In this illustration, a developer key issues automatically upon the completion of the required registration information. Alternatively, a network application provider **10** may require a manual authorization of a user before a developer key is issued. In still another alternative, one type of user, such as an end-user, may be automatically issued a developer key, while another type of user, such as a third-party developer, may require authorization before a developer key issues. One of ordinary skill in the art will readily recognize that any or all of the registration information entered by a user may be used to determine whether a developer key issues automatically or requires a manual authorization process.

Once a developer key has issued to a user and the user has selected an online tool **50,** the process proceeds to Step **112** where a determination is made whether the user has selected a premium tool **50.** In a preferred embodiment, some online tools **50** are available to all users who have a valid developer key, while other premium online tools are available only to select users. In an alternative embodiment, the web page lists only those online tools **50** that the user is authorized to select and the check for a premium service request is bypassed. Once the licensing and access application **45** determines that the user is authorized to access the selected online tool, the process proceeds to Step **114** and the user receives the documentation **55** related to the selected tool **50.**

In the disclosed embodiment, if the user requests documentation **55** for an online tool **50** that the user is not authorized to access, a request for authorization **90** is forwarded to the network application provider in Step **115.** If the request for authorization **90** is approved, the network application provider **10** notifies the user (Step **116**) that access to the online tool **50** is authorized. In a preferred embodiment, data stored in the developer key file **65** determines which online tools **50** a user is authorized to access. When a request for authorization **90** is granted, the developer key file **65** is updated to reflect the user's broader access rights (Step **117**). One of ordinary skill in the art will readily recognize, however, that user access rights can be stored separately or in included as part of another file in the network application licensing and access system **25.**

In a preferred embodiment, the grant of a request for authorization **90** is a manual step based on a marketing decision. But it will be readily apparent to one of ordinary skill in the art that the approval process could be automated and the determination based on information available in the user's profile or based on additional information requested from the user.

The online application documentation **55** received by the user in Step **114** may take many forms. In a preferred embodiment, the documentation **55** explains in detail how to access and use the online tool. For example, the documentation **55** may include a user manual **95,** technical specifications **100** and one or more file formats **105,** such as input and output record formats.

The foregoing steps describe the process by which an end-user obtains a developer key. The term end-user is intended broadly, however, and is not limited to a single user. For example, an end-user as that term is used herein, may be the developer of a client application for a company. In this example, the end-user developer, while not a third-party developer (because the software to be developed will not be sold commercially) is nevertheless developing a client application to be used by others. Thus, multiple users within a company might use an end-user developer's client application and share a developer key issued to the end-user.

The following paragraphs describe the process flow according to an embodiment of the present invention by which a third-party developer agrees to a developer license agreement **110** and receives a developer key.

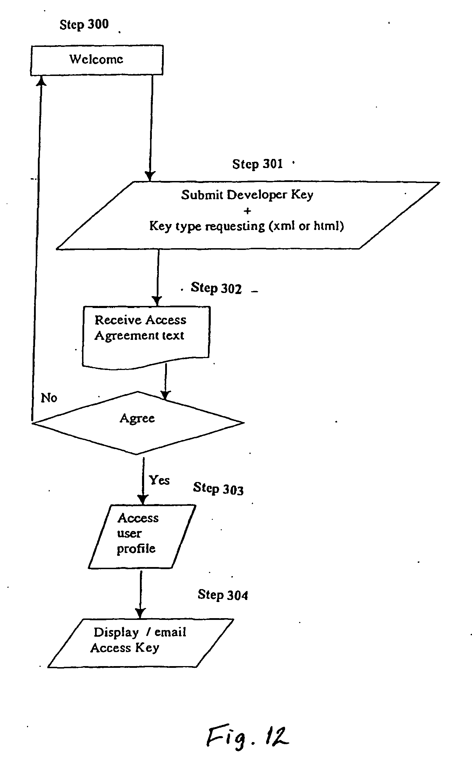

With reference to the high-level flow diagram of Fig. 11, in Step **200** a user accesses a web site of a network application provider **10** and receives an introductory web page. In Step **201,** a determination is made whether the user is an end-user or a third-party develope.r In the case of the third-party developer, the process proceeds to Step **202** wherein it is determined whether the third-party developer has been issued a developer key. If a developer key has not been issued, the process proceeds to Step **203** and the third-party developer's request for a developer key is generated and forwarded to the network application provider **10.**

In a preferred embodiment, the process of approving a third-party developer's request for a developer key is manual as it gives the network application provider **10** greater control over those users that intend to incorporate the use of the online tools **50** as part of a commercial application. In this process, the network application provider **10** manually reviews the developer's request and makes a business decision as to whether to grant a developer key that will ultimately be incorporated into software and sold to the public (Step **204**). Of course, one of ordinary skill in the art will readily recognize that the approval process for developers can be automated and may be based upon the developer registration information or upon additional information that the network application provider **10** may require.

If the network application provider accepts the request for a developer key, the process proceeds to Step **205** where the third-party developer receives a developer license agreement **110**. Because the developer key is being issued for use in commercial software, the step of entering into a developer license agreement **110** with a third-party developer may be manual to provide the network application provider **10** greater control over the transaction. Of course, it will be readily apparent to one of ordinary skill in the art that the steps involved in licensing a third-party developer may be readily automated.

If the third-party developer accepts the developer license agreement **110** and has a valid userid (Step **206**), the process proceeds to Step **207** and the network application provider **10** updates one or more files to provide the appropriate application access to users having that developer key. In the disclosed embodiment, the developer key issued to a third-party developer will be incorporated in commercial software and every user of that software will use the same developer key. In the one embodiment, the developer key file **65** is updated when a developer key **15** is issued for use in commercial software and flags are set to indicate that multiple users will use the key. It will be readily apparent that a separate file may be maintained for developer keys issued to third-party developers and that some or all of the data may reside in one or more of the other files of a network application licensing and access system **25.**

Again with reference to Fig. 11, when it is determined that a user has a valid developer key, the user is prompted to logon (Step **208**) and to select an online tool **50** (Step **209**) for which the user requests documentation **55.** As part of the logon process of Step **208,** the user has the choices of logging out of the system (Step **210**) or updating his or her user profile information (Step **211**). In the case of third-party developers, the user that logs on to the system in Step **208** may be the third-party developer or any of the users that purchase and use the third-party software sold by the third-party developer. Alternatively, the user in Step **208** may be any of several users authorized to use a specific installation of a third-party developer installation. Users of commercial third-party software share the developer key that was issued to the third-party developer that developed the software. Each installation of that software, however, is assigned a unique access key **25.**

When a user selects an online tool **50,** the process proceeds to Step **212** where a determination is made whether the user has access to the selected tool **50.** The licensing and access application **45** processes the user's request for documentation **55** relating to the selected online tool **50.**

In one embodiment, a developer key file **65** includes a list of online tools **50** that may be used for a given developer key. In this embodiment, all users of the third-party software and/or all client installations of the software have the same level of authorization. In an alternative embodiment, the authorization level for a set of tools **50** is determined at the access key **25** level and the determination of whether a user has access to a given tool is based upon the access key **25** for that user. In still another embodiment, multiple users have access to a particular installation of a third-party developed application and the determination of whether a user has access to an online tool **50** depends on the identity of the individual user.

In still another embodiment, a user may have access to documentation **55** for all online tools **50,** but may be authorized to access only some of the tools. Alternatively, a separate file of authorized users may be kept for each online tool **50** and used to determine whether a given user is authorized to request documentation **55** for a given online tool **50.** Again, access to networked applications may be controlled at the developer key level, access key level or at the individual user level. One of ordinary skill in the art will readily recognize that many methods of controlling user access are well known in the art and are available for use with the present invention.

If the user is authorized for the selected online tool **50,** the process proceeds to Step **213** and the user is given access to the online tools documentation **55** for the selected tool **50.** If the user is not authorized to access documentation **55** for the selected tool **50,** the process proceeds to Step **214** where the user is notified that he or she is lacks authorization for the selected tool **50.**

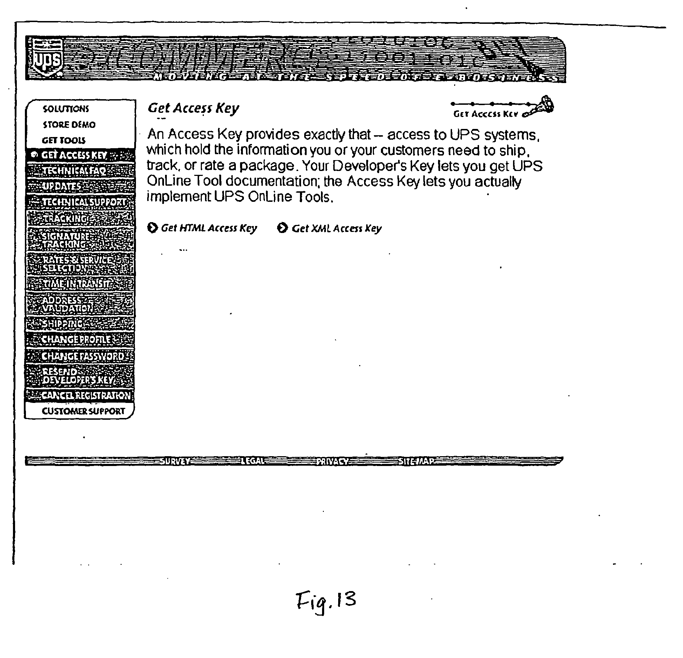

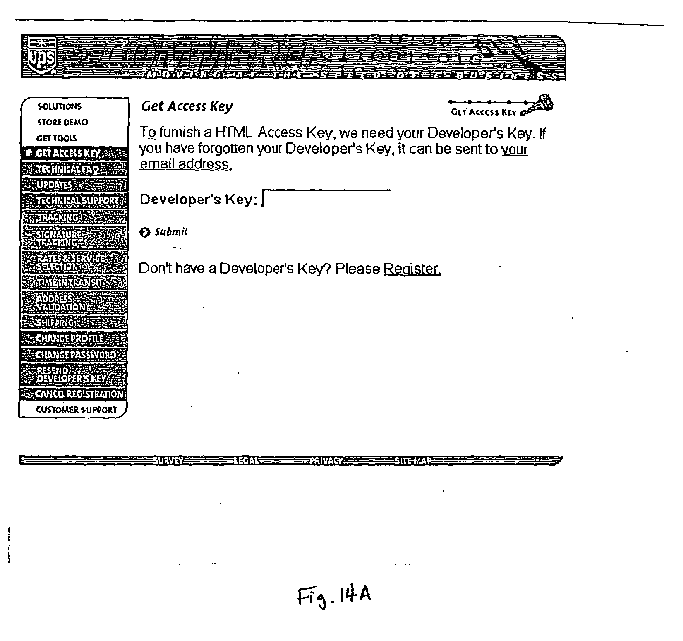

Fig. 12 is a flow chart that describes the process of assigning an access key **25**. The process described in the following paragraphs applies to individual users that are assigned an access key **25.** The process also applies to the assignment of access keys **25** to individual installations of third-party commercial applications (which may be operated by a single user or by multiple users). In Step **300,** the user is presented with a welcome web page and is presented with a link to request an access key **20.** In Fig. 4, this is seen in the Get Access Key link on the left side of the web page. When the user clicks on the Get Access Key link, the user receives a web page like the one illustrated in Fig. 13 and is prompted to request either a hypertext markup language access key (hereafter HTML access key **115**) or an extended markup language access key (hereafter XML access key **120**). HTML and XML are standards that are well known in the art and used to define elements on a World Wide Web page and in business to business documents. The two formats share a similar tag structure but whereas HTML defines how the elements in a document are displayed, XML defines what the elements contain. The use of HTML and XML is intended to be illustrative, other data formats and/or languages are well known in the art and may be used with the present invention.

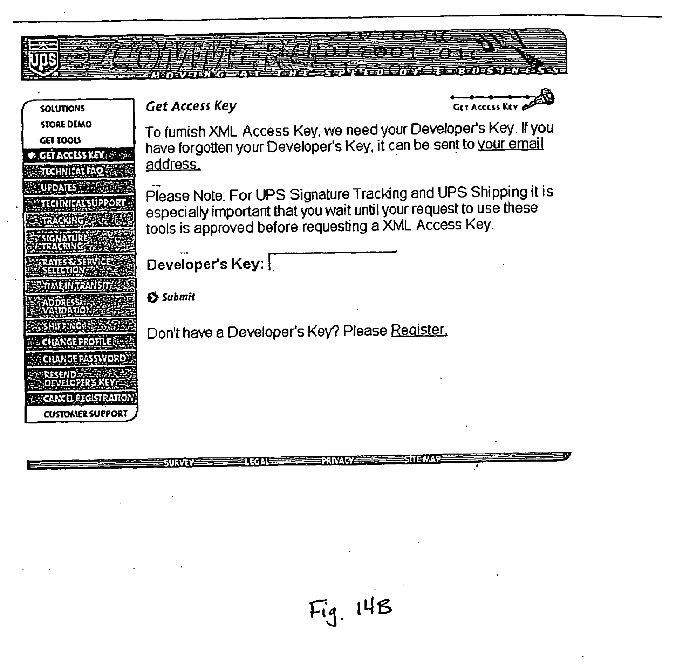

A user selects either the HTML access key **115** or XML access key **120** by clicking on the associated link. When the user selects one of the two types of access keys, the process proceeds to Step **301** where the user receives either a web page like that shown in Fig. 14A, if the user requests an HTML access key **115,** or Fig. 14B, if the user requests an XML access key **120.** In Step **301,** the user is prompted to enter his or her developer key. In an alternative embodiment, a user of an installation of third-party software is not prompted for a developer key as a valid key is automatically sent when the third-party software connects to the network application licensing and access system **25.** In fact, users of third-party software installations may not even be aware of the developer key associated with the software they are using. In fact, in some embodiments me communication between third-party and/or end-user software and the licensing and access application **45** may be automatic and not involve human intervention at all.

The developer key transmitted by a user or client application is captured by the licensing and access application **45** and validated against the developer key file **65**. If a valid developer key is received, the process proceeds to Step **302.**

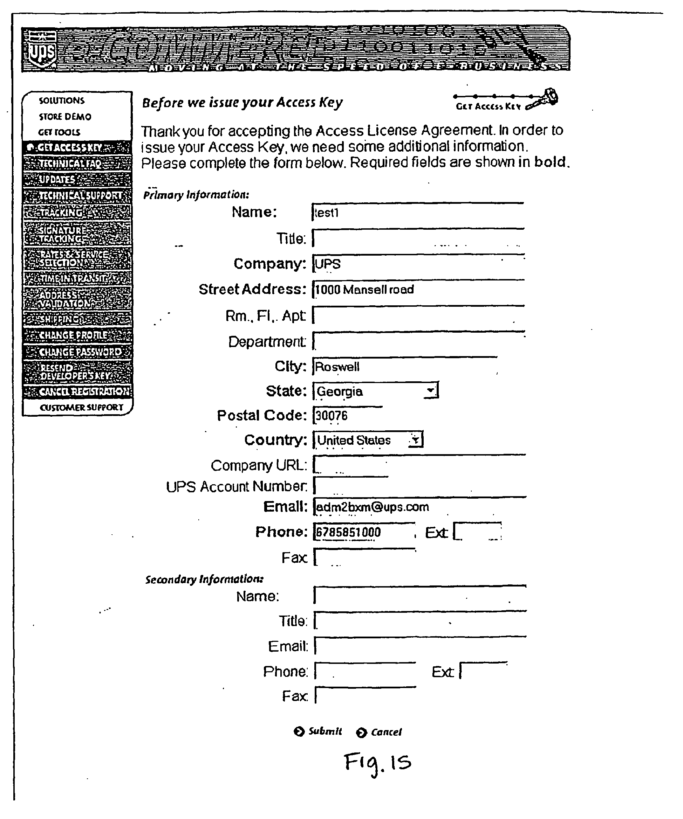

In Step **302,** the user is shown an access licensing agreement **125** and is prompted to accept or reject the terms of the agreement **125.** If the user accepts the terms of the access licensing agreement **125,** the process proceeds to Step **303** and the user is prompted to provide additional user information. Fig. 15 illustrates the type of additional information that may be requested from the user seeking an access key. In a preferred embodiment, required fields are shown in boldface type. One of ordinary skill in the art will readily recognize that different types of user information may be required depending on the business needs of the network application provider **10** and the online tool **50** for which the user requests access. In addition, the information requested from the user may differ based upon the type of user or the online tool **50** being requested.

When the requisite information is provided, the process proceeds to Step **304** and an access key **20** is generated and assigned. In a preferred embodiment, the access key **20** is generated by the licensing and access application **45** and stored in the access key file **70.** But it will be readily apparent that the access key **20** can be generated by a separate application and/or be stored in another file or database in the network application licensing and access system **25.** Similarly, an access key **20** may be automatically generated when the process reaches Step **304,** or the process may include a manual authorization step in which the network application provider **10** scrutinizes each request before an access key **20** is assigned. The manual step may, for example, require a signed access licensing agreement **125** before an access key **20** is issued.

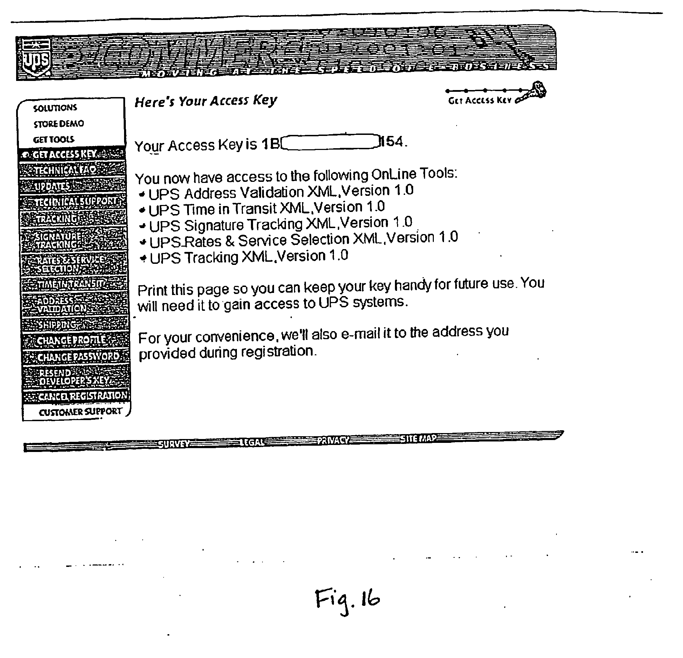

Fig. 16 illustrates the type or web page that a network application provider **10** might use to present an access key **20.** The access key **20** may be provided by a web page or, alternatively, via electronic mail or other data transmission methods that are well known to one of ordinary skill in the art.

Upon receipt of both a developer key and access key **20**, a user has access to one or more of the online tools **50.** In a preferred embodiment, the documentation **55** that the user receives for a selected online tool **55** includes describes the format of the data that is inputted to the tool **50.** Each record format includes fields for the user's developer key and access key **20**. When a user accesses an online tool **50,** a check is performed to confirm that the input record includes a valid developer key and access key **20.** If the two keys are valid, then the online tool **50** processes the input data. If one or more of the keys are invalid, an error message is returned.

In an alternative embodiment, an input record only contains an access key **20** and the licensing and access application **45** obtains the developer key from a file or database that links issued access keys to developer keys. In a preferred embodiment, only the access key **20** is passed in a XML transaction and both the access and developer keys are passed in an HTML transaction.

In a preferred embodiment, the licensing and access application **45** performs the check of the developer and access **20** keys prior to passing the input data to the online tool **50.** But it will be readily apparent to one of ordinary skill in the art that a separate application can perform this validity check or that the online tool **50** can perform this validation routine prior to processing the user data. In an alternative embodiment, the selection of the tool **50** determines whether the key validation routine is performed by an online tool **50** or by a separate application.

A tracking function may also be part of the key validation routine. Thus, each time a user accesses an online tool **50,** or alternatively, each time a client installation of a third-party commercial application is used to access an online tool **50,** a tracking file is updated with the developer key and access key **20** used to access the tool **50**. In a preferred embodiment, a single database is used to track all access to every online tool **50.** But it will be readily apparent to one of ordinary skill in the art that a separate tracking file may be associated with each online tool **50** or with each developer or access key.

In the processes described above, a developer key is assigned to every client application that is used to access a set of online tools **50.** Every user of a given client application uses the developer key associated with the client application. In a preferred embodiment, the developer key is embedded into the client application, but it will be readily apparent that users may also be prompted to supply the developer key as' part of the operation of the client application.

In contrast to the developer key, a unique access key **25** is assigned to identify the multiple installations of the client application. In one embodiment, each user of a client application may be assigned a unique access key **25.** In an alternative embodiment, an access key **25** is assigned to a single installation of a client application that is used by more than one user. Thus, in this alternate embodiment, a user shares both the developer key and access key **25** with other users.

In many instances, a network application provider **10** may not require user-specific information and may allow access to one or more online tools **50** based solely on the combination of developer and access keys. In other embodiments, however, access to one or more online tools **50** may require that individual users provide user-specific information. In such a case, users may be prompted to provide a user identifier and/or a password in addition to the developer and access key combination before access is granted.

This developer and access key approach to user access of networked applications gives the network application provider **10** great flexibility in tracking and controlling access to online tools **50.** The access key **20** allows the licensing and access application **45** to track which users and/or which installations of commercial software are being used to access the tools **50.** this, in turn, allows the application provider 10 to track and control the frequency with which different client applications are used by users.

This two-key system thus indicates to the network application provider **10** when there is a business relationship between a specific user and a third-party developer. Of course, it will be readily apparent to one of ordinary skill in the art that the steps involved in establishing this relationship between two or more parties could readily be adapted for any provider of Internet applications.

This two-key approach to licensing and application access also offers the network application provider **10** great flexibility in dynamically controlling access to its online tools **50.** The provider **10** has the ability to dynamically grant or disable access to its tools at either the developer key level of the access key **25** level. In a preferred embodiment, a provider **10** can disable all users of a client application by disabling a developer key. Alternatively, a provider **10** can disable individual installations or users of a client application by disabling the access key **25.** This functionality allows a network application provider **10** to monitor and dynamically adjust its relationship with individual users and groups of users as necessary.

One of ordinary skill in the art will readily recognize that the present invention is equally advantageous using more than two keys. In an alternative embodiment for example, a first key may be assigned to the developer of a client application, a second key to a specific installation of the client application and a third key to a specific user of the installation. In this way, the present invention allows an application provider **10** to track and dynamically control the access to online tools **50** at a developer, client or user level.

The invention is thus equally advantageous whenever one or more users access a networked application via software on behalf of another user or entity. The present invention allows an application provider to track individual user access to applications even when the users are accessing the applications through software common to a business or company. In another embodiment, for example, a busmess or company might assign a first key to a department, a second key to salaried employees within that department, and a third key to hourly employees within the department. In this embodiment, the company can track and control access to its tools 50 by department and classification of employees. These embodiments are intended to be illustrative and it will be readily apparent to one of ordinary skill in the art that the ability to track and control access to networked applications using the present invention will be equally advantageous in a variety of other contexts.

In concluding the detailed description, it should be noted that it will be obvious to those skilled in the art that many variations and modifications can be made to the preferred embodiment without substantially departing from the principles of the present invention. Also, such variations and modifications are intended to be included herein within the scope of the present invention as set forth in the appended claims. Further, in the claims hereafter, the structures, materials, acts and equivalents of all means or step-plus function elements are intended to include any structure, materials or acts for performing their cited functions.

## Claims

1. A system for selectively providing a user with access to an online tool over a network (40), the system comprising:
a customer computer (30);
an access control application (45) in electronic communication with said customer computer via said network, said access control application configured to authorize said user to access said online tool, and said access control application further configured to issue a developer key (70) and an access key (65) to said authorized user, and
an access tracking application in electronic communication with said access control application, said access tracking application configured to track said authorized user access to said online tool,
**characterized in that** said access control application is further configured to allow access to said online tool upon receipt from said user of said developer and said access keys (70, 65).

2. The system of claim 1, wherein said access tracking application tracks said authorized user access to said online tool by tracking access by said developer and said access keys (70, 65).

3. The system of claim 2, wherein said access tracking application is further configured to update a tracking file to indicate that said online tool was accessed using said developer and said access keys.

4. The system of claim 1, wherein said access control application is further configured to send a license agreement to said customer computers.

5. The system of claim 1, wherein said access control application is further configured to send a first license agreement to said customer computer prior to issuing said developer key, and is further configured to send a second license agreement to said customer computer prior to issuing said access key.

6. A method to allow an application provider to track access to network applications by users of third-party software, said method comprising the steps of:
issuing a first key to a developer of said third-party software, wherein said first key is common to a plurality of users of said third-party software;
issuing a second key to a user, wherein said user is one of said plurality of users of said third-party software;
requiring that said first and second keys be provided to access said network application; and
tracking said access to said network application by said first and second keys.

7. The method of claim 6, wherein said second key is unique to said user.

8. The method of claim 6 further comprising the step of entering into a license agreement with said developer prior to issuing said first key.

9. The method of claim 6 further comprising the step of entering into a license agreement with said user prior to issuing said second key.

10. The method of claim 6, wherein requiring that said first and second keys be provided to access said network application, comprises the steps of:
providing said developer with a data format for an input file associated with said network application, wherein said record layout includes a first key field and a second key field; and
confirming that said input file to said network application contains said first key in said first key field and said second key in said second key field.

11. The method of claim 6, wherein tracking said access to said network application by said first and second keys comprises the step of updating a tracking file to indicate that said network application was accessed using said first and second keys.

## Patentansprüche

1. System, das einem Benutzer selektiv über ein Netzwerk (40) Zugang zu einem Online-Werkzeug gibt, umfassend:
einen Kundencomputer (30);
eine Zugangskontrollanwendung (45), die elektronisch über das Netzwerk mit dem Kundencomputer kommuniziert, wobei die Zugangskontrollanwendung so konfiguriert ist, dass sie den Benutzer für den Zugang zu dem Online-Werkzeug autorisiert, und die Zugangskontrollanwendung ferner so konfiguriert ist, dass sie einen Entwicklerschlüssel (70) und einen Zugangsschlüssel (65) an den autorisierten Benutzer ausgibt, und
eine Zugangs-Tracking-Anwendung, die elektronisch mit der Zugangskontrollanwendung kommuniziert, wobei die Zugangs-Tracking-Anwendung so konfiguriert ist, dass sie den Zugang des autorisierten Benutzers zu dem Online-Werkzeug verfolgt,
**dadurch gekennzeichnet, dass** die Zugangskontrollanwendung ferner so konfiguriert ist, dass sie nach Empfang des Entwickler- und des Zugangsschlüssels (70, 65) von dem Benutzer den Zugang zu dem Online-Werkzeug erlaubt.

2. System nach Anspruch 1, wobei die Zugangs-Tracking-Anwendung den Zugang des autorisierten Benutzers zu dem Online-Werkzeug verfolgt, indem der Zugang durch den Entwickler- und den Zugangsschlüssel (70, 65) verfolgt wird.

3. System nach Anspruch 2, wobei die Zugangs-Tracking-Anwendung ferner so konfiguriert ist, dass sie eine Tracking-Datei aktualisiert, um anzuzeigen, dass Zugang zu dem Online-Werkzeug unter Verwendung des Entwickler- und des Zugangsschlüssels erfolgte.

4. System nach Anspruch 1, wobei die Zugangskontrollanwendung ferner so konfiguriert ist, dass sie einen Lizenzvertrag zu dem Kundencomputer sendet.

5. System nach Anspruch 1, wobei die Zugangskontrollanwendung ferner so konfiguriert ist, dass sie vor dem Ausgeben des Entwicklerschlüssels einen ersten Lizenzvertrag zu dem Kundencomputer sendet und ferner so konfiguriert ist, dass sie vor dem Ausgeben des Zugangsschlüssels einen zweiten Lizenzvertrag zu dem Kundencomputer sendet.

6. Verfahren, das es einem Anwendungsanbieter erlaubt, den Zugang zu Netzwerkanwendungen durch Benutzer von Software Dritter zu verfolgen, wobei das Verfahren die folgenden Schritte umfasst:
Ausgeben eines ersten Schlüssels an einen Entwickler der Software Dritter, wobei der erste Schlüssel mehreren Benutzern der Software Dritter gemeinsam ist;
Ausgeben eines zweiten Schlüssels an einen Benutzer, wobei der Benutzer einer der mehreren Benutzer der Software Dritter ist;
Erfordern, dass für Zugang zu der Netzwerkanwendung der erste und der zweite Schlüssel angegeben werden; und
Verfolgen des Zugangs zu der Netzwerkanwendung durch den ersten und den zweiten Schlüssel.

7. Verfahren nach Anspruch 6, wobei der zweite Schlüssel dem Benutzer eigen ist.

8. Verfahren nach Anspruch 6, ferner mit dem Schritt des Eintretens in einen Lizenzvertrag mit dem Entwickler vor dem Ausgeben des ersten Schlüssels.

9. Verfahren nach Anspruch 6, ferner mit dem Schritt des Eintretens in einen Lizenzvertrag mit dem Benutzer vor dem Ausgeben des zweiten Schlüssels.

10. Verfahren nach Anspruch 6, wobei das Erfordern, dass für Zugang zu der Netzwerkanwendung der erste und der zweite Schlüssel angegeben werden, die folgenden Schritte umfasst:
dem Entwickler wird ein Datenformat für eine mit der Netzwerkanwendung assoziierte Eingabedatei bereitgestellt, wobei das Datensatzlayout ein erstes Schlüsselfeld und ein zweites Schlüsselfeld enthält; und
Bestätigen, dass die Eingabedatei für die Netzwerkanwendung in dem ersten Schlüsselfeld den ersten Schlüssel und in dem zweiten Schlüsselfeld den zweiten Schlüssel enthält.

11. Verfahren nach Anspruch 6, wobei das Verfolgen des Zugangs zu der Netzwerkanwendung durch den ersten und den zweiten Schlüssel den Schritt umfasst, eine Tracking-Datei zu aktualisieren, um anzuzeigen, dass Zugang zu der Netzwerkanwendung unter Verwendung des ersten und des zweiten Schlüssels erfolgte.

## Revendications

1. Système destiné à donner sélectivement à un utilisateur accès à un outil en ligne par un réseau (40), le système comprenant :
un ordinateur client (30),
une application (45) de commande d'accès en communication électronique avec l'ordinateur client par le réseau, l'application de commande d'accès étant configurée pour autoriser l'accès de l'utilisateur à l'outil en ligne, et l'application de commande d'accès étant donc configurée afin qu'elle émette une clé de développeur (70) et une clé d'accès (65) vers l'utilisateur autorisé, et
une application de suivi d'accès en communication électronique avec l'application de commande d'accès, l'application de suivi d'accès ayant une configuration telle qu'elle suit l'accès de l'utilisateur autorisé à l'outil en ligne,
**caractérisé en ce que** l'application de commande d'accès est en outre configurée afin qu'elle permette l'accès à l'outil en ligne lors de la réception à partir de l'utilisateur des clés de développeur et d'accès (70, 65).

2. Système selon la revendication 1, dans lequel l'application de suivi d'accès suit l'accès par l'utilisateur autorisé de l'outil en ligne par suivi de l'accès à l'aide des clés de développeur et d'accès (70, 65).

3. Système selon la revendication 2, dans lequel l'application de suivi d'accès a en outre une configuration telle qu'elle remet à jour un fichier de suivi pour indiquer que l'outil en ligne a été atteint à l'aide des clés de développeur et d'accès.

4. Système selon la revendication 1, dans lequel l'application de commande d'accès a en outre une configuration telle qu'elle émet un accord de licence vers l'ordinateur client.

5. Système selon la revendication 1, dans lequel l'application de commande d'accès a en outre une configuration telle qu'elle transmet un premier accord de licence vers l'ordinateur client avant d'émettre la clé de développeur, et elle a en outre une configuration telle qu'elle émet le second accord de licence vers l'ordinateur client avant l'émission de la clé d'accès.

6. Procédé destiné à permettre à un fournisseur d'applications de suivre l'accès à des applications en réseau par des utilisateurs d'un logiciel tiers, le procédé comprenant les étapes suivantes :
l'émission d'une première clé vers un développeur du logiciel tiers, la première clé étant commune à plusieurs utilisateurs du logiciel tiers,
l'émission d'une seconde clé vers un utilisateur, l'utilisateur étant l'un des utilisateurs du logiciel tiers,
la demande de la transmission de la première et de la seconde clé pour l'accès à l'application en réseau, et
le suivi de l'accès à l'application en réseau à l'aide de la première et de la seconde clé.

7. Procédé selon la revendication 6, dans lequel la seconde clé est propre à l'utilisateur.

8. Procédé selon la revendication 6, comprenant en outre l'étape d'établissement d'un accord de licence avec le développeur avant l'émission de la première clé.

9. Procédé selon la revendication 6, comprenant en outre l'étape d'établissement d'un accord de licence avec l'utilisateur avant l'émission de la seconde clé.

10. Procédé selon la revendication 6, dans lequel la demande de la transmission des première et seconde clés pour l'accès à l'application en réseau comprend les étapes suivantes :
la transmission au développeur d'un format de données d'un fichier de saisie associé à l'application en réseau, la construction d'un enregistrement comprenant un champ d'une première clé et un champ d'une seconde clé, et
la confirmation du fait que le fichier de saisie pour l'application en réseau contient la première clé dans le champ de première clé et la seconde clé dans le champ de seconde clé.

11. Procédé selon la revendication 6, dans lequel le suivi de l'accès à l'application en réseau à l'aide des première et seconde clés comprend l'étape de remise à jour d'un fichier de suivi destiné à indiquer que l'application en réseau a été atteinte à l'aide des première et seconde clés.
